# EUROPÄISCHE PATENTSCHRIFT

(11) **EP 0 837 088 B1**
(45) Veröffentlichungstag und Bekanntmachung des Hinweises auf die Patenterteilung: **13.09.2000**
(21) Anmeldenummer: 97118071.6
(22) Anmeldetag: 17.10.1997
(51) Int. Cl.: C08G 69/44

(54) **Haftvermittler für Polyamid-Verbunde**
Adhesion promoter for polyamide composites
Promoteur d'adhésion pour des composites à base de polyamide

(30) Priorität: 18.10.1996 DE 19643143
(43) Veröffentlichungstag der Anmeldung: 22.04.1998
(73) Patentinhaber: EMS-INVENTA AG, 8002 Zürich (CH)
(72) Erfinder: Hoff, Heinz, Dr. rer. nat., 7015 Tamins (CH)
(74) Vertreter: Becker Kurig Straus

(56) Entgegenhaltungen:
- EP-A- 0 042 008
- EP-A- 0 084 643
- EP-A- 0 504 784
- EP-A- 0 717 064
- DE-A- 2 129 476
- DE-A- 3 435 053
- GB-A- 1 081 452
- GB-A- 1 140 463

## Beschreibung

Die Erfindung betrifft neuartige Haftvermittler für Polyamid-Verbunde, insbesondere für Polyamid 12-Polybutylenterephthalat-Verbunde.

Gegenstand der Erfindung sind insbesondere neue Haft- und Verträglichkeitsvermittler auf der Basis von hochmolekularen Block-(Co)polyesteramiden, hergestellt durch direkte Veresterung von carboxyl- oder hydroxycarboxylterminierten Polyamidvorkondensaten, hydroxyl- oder hydroxycarboxylterminierten Polyestervorkondensaten und einer weiteren Diolkomponente. Die Block-(Co)polyesteramide weisen zwei separate kristalline Phasen auf, die durch die (Co)polyamid- und (Co)polyester (PES)-Segmente gebildet werden. Des weiteren betrifft die Erfindung ein Verfahren zur Herstellung dieser Block-(Co)polyesteramide und die Verwendung der Block-(Co)polyesteramide zur Herstellung von Fasern, Folien, Formkörpern und insbesondere als Haftvermittler korrespondierender Polyamid-Polyester-MehrschichtverbundeundalsVerträglichkeitsvermittlerentsprechender Polymerblends.

EP-A-0287839 beschreibt u.a. Mehrschichtverbunde aus Polyamidmischungen und Polyesterharzen. Als Haftvermittler werden Thermoplaste verwendet, deren chemische Zusammensetzung von den angrenzenden Schichten des Verbundes verschieden ist. Als geeignete Haftvermittler werden funktionalisierte Polyolefine, funktionalisierte Ethylen-Vinylacetat-Copolymere, Ethylen-Acrylat-Copolymere, lonomere, Polyalkylenoxid-Polyester-Blockpolymere, Derivate von Carboxymethylcellulose sowie Blends dieser Polymeren mit Polyolefinen genannt. Die mit diesen Haftvermittlern im System Polyamid/Polyester erreichbaren Verbundfestigkeiten sind jedoch gering und gehen bei Erwärmen oder in Kontakt mit Lösungsmitteln völlig verloren, da die Haftvermittler nicht ausreichend wärmeformbeständig und lösemittelbeständig sind.

EP 0509211 B1 und EP 0509212 B1 beschreiben thermoplastische Mehrschichtverbunde auf der Basis von Polyamiden und Polyestern. Die beschriebenen Haftvermittler sind Polyamid-Polyester-Blends, die durch reaktive Extrusion erhalten wurden. Reaktive Extrusion unter Verwendung von Polyamid und Polyester wird u.a. in EP-A-0084643 und in "Polymer Engineering and Science, 24, 1300 (1984) beschrieben. Nachteilig ist, daß nur ein geringer Anteil der Blendpartner zu Copolymeren, jedoch mit völlig undefinierter Struktur umgewandelt wird. Die Blends weisen in der Regel schlechte mechanische Eigenschaften auf; ausgeprägt ist insbesondere ihre hohe Sprödigkeit. Die Verbundfestigkeit dieser Blends zu den entsprechenden Ausgangskomponenten ist meist nur für einen Blendpartner ausreichend.

Aus EP 042008 B1 sind Polyesteramide bekannt, die im Polyesterteil Benzoldicarbonsäuren und 1,4-Butandiol und im Polyamidteil ω-Aminoundecansäure bzw. ω-Aminododekansäure enthalten. Da die Polyamidkomponenten als Monomere eingesetzt werden, resultiert zum einen ein statistischer Einbau der Komponenten, zum anderen ein teilweiser Abbau des Polyestervorkondensates. Aufgrund ihres Aufbaus sind solche Materialien ungeeignet, um als Haftvermittler zu wirken.

Die in DE-A-3435053 beschriebenen Block-Polyesteramide werden aus Block-Polyamiddicarbonsäuren mit einer mittleren Molmasse von 1000 - 8000 g/mol und Blockpolyesterdiolen hergestellt. Die beschriebene Arbeitsweise bewirkt jedoch einen starken Abbau der eingesetzten Polyamid- und Polyesterblöcke. Auch hier besitzen die Polyamid- und Polyester-Anteile nur geringe Polymerisationsgrade. Eine phasenvermittelnde Wirkung für entsprechend zusammengesetzte Homopolymere tritt nicht ein, da zum einen durch die mittlere Oberflächenspannung der statistischen Polyesteramide keine der angrenzenden Polymerschichten optimal benetzt wird und zum anderen grössere Kettenabschnitte nicht ungestört in Wechselwirkung treten können. Der niedrige Schmelzpunkt von statistischen Polyesteramiden führt bei Erwärmen schnell zum Verlust der Verbundfestigkeit. Zudem besitzen statistische Polyesteramide im Vergleich zu Polyamiden und Polyester geringe Reissfestigkeiten.

DE-A-2129476 beschreibt Schmelzklebstoffe auf Basis eines Block-Polyesteramids mit hoher Wärmeformbeständigkeit. Das Block-Polyesteramid besteht aus einem teilkristallinen Polyester- und einem amorphen Polyamidanteil. Die Polyestersegmente werden in situ durch Glykolisierung und Umamidierung, ausgehend von hochmolekularen Polyestern, erzeugt. Die Arbeitsweise sowie die im Vergleich zum Homopolyester niedrigen Schmelzpunkte lassen auf niedrige Blocklängen und/oder intensive Amid-Ester-Austauschreaktionen schließen. Die als Schmelzkleber eingesetzten Polyesteramide haben eine relativ niedrige Molmasse. Ähnliche Produkte werden in US-A-4,548,996 und GB-A-1340214 beschrieben.

US-A-3,849,514 beschreibt Block-Polyesteramide mit verbesserter Segmentstabilität. Die aus Diaminen und Dicarbonsäuren aufgebauten Vorkondensate müssen vor der weiteren Umsetzung mit Polyesterdiolen mit Ester- oder Hydroxylesterendgruppen versehen werden. Eine Variante besteht im Aufbau der esterverkappten Polyamidvorkondensate durch Aminolyse der Diester von Dicarbonsäuren, wobei bevorzugt das Phenolat eingesetzt wird. Bei der weiteren Umsetzung muß Phenol abdestilliert werden. Der Polyamidteil beschränkt sich auf Polyamide des Typs AABB. Laktame und ω-Aminocarbonsäuren werden nicht als Monomere aufgeführt.

Die meisten Polymere sind miteinander unverträglich. Daher müssen bei der Herstellung von leistungsfähigen Mehrschichtverbunden und Polymermischungen geeignete Haftvermittler bzw. Verträglichkeitsvermittler eingesetzt werden. Eine optimale Wechselwirkung zwischen Polymer und einem geeigneten Haftvermittler kann nur dann vorausgesetzt werden, wenn identische Struktureinheiten ausreichender Grösse miteinander wechselwirken können. Die oben genannten Haftvermittler des Standes der Technik mit einer von Polyamid und Polyester abweichenden Struktur und chemischen Zusammensetzung sind daher nur bedingt für Polyamid-Polyester-Verbunde geeignet.

Den meisten zuvor beschriebenen Polyesteramiden fehlt der definierte Aufbau, insbesondere besitzen die Polyamid- und Polyestersegmente aufgrund der eingesetzten Monomere oder des Herstellverfahrens zu kleine Polymerisationsgrade, so daß die Wechselwirkung zu Polyamid und Polyester auf niedrigem Niveau verbleibt. Auch sind oft die erreichten Molmassen und damit die Schmelzviskosität zu niedrig, als daß diese Materialien durch Extrusion verarbeitbar sind und genügende mechanische Eigenschaften aufweisen. Eine haftvermittelnde Wirkung für entsprechende korrespondierende Polyamid-Polyester-Mehrschichtverbunde wird nicht beschrieben. Dies ist aufgrund des eher statistischen Aufbaus dieser Produkte auch nicht zu erwarten. Mässige mechanische Eigenschaften und die niedrige Schmelztemperatur dieser Produkte schränken die Anwendungsmöglichkeiten weiter ein. Zudem lösen sich die statistischen Polyesteramide in vielen gängigen Lösungsmitteln, so dass bei deren Einwirkung der Verbund ebenfalls aufgelöst wird.

Der Erfindung liegt daher die Aufgabe zugrunde, spezielle Haftvermittler für Polyamid-Polyester-Mehrschichtverbunde und Verträglichkeitsvermittler für Polymerblends zur Verfügung zu stellen, die sich durch Extrusion oder Coextrusion verarbeiten lassen und deren mechanischen Eigenschaften auf die jeweilige Applikation abgestimmt werden können.

Diese Aufgabe wird durch die folgenden erfindungsgemässen Haft- bzw. Verträglichkeitsvermittler-Formmassen auf Basis von Block-(Co)polyesteramiden gelöst:

Haft- bzw. Verträglichkeits-Vermittler auf Basis von teilkristallinen, hochmolekularen Block-(Co)polyesteramiden, dadurch gekennzeichnet, daß die Block-(Co)polyesteramide zwei kristalline Phasen aufweisen, der Gewichtsanteil der Esterstrukturen der Block (Co)polyesteramide zwischen 30 und 70%, der Anteil der Amidstrukturen zwischen 70 und 30% beträgt, und als Segmente enthalten:
(A) mindestens einen Polyamid-Block mit einer einheitlichen zahlenmittleren Molmasse von mindestens 1000 g/mol, der aus Struktureinheiten aus Laktamen bzw. α,ω-Aminocarbonsäuren mit 6 bis 12 C-Atomen sowie gegebenenfalls Dicarbonsäuren mit 2 bis 44 C-Atomen aufgebaut ist,
(B) mindestens einen Polyester- und/oder Copolyesterblock mit einer einheitlichen zahlenmittleren Molmasse von mindestens 1000 g/mol, der aus aromatischen Dicarbonsäuren und aliphatischen oder cycloaliphatischen C2 - C12 Diolen aufgebaut ist, und
(C) mindestens eine Diolkomponente mit einer zahlenmittleren Molmasse von mindestens 500 g/mol ausgewählt aus Polyalkylenadipaten auf Basis von C2 - C6-Diolen, Polycaprolactondiolen, Polyalkylendimeraten, Poly(ethylenglykol), Poly(propylenglykol) und Polytetrahydrofuran, und der primären Diole der allgemeinen Struktur

   HO-R-OH,

   wobei R aus der Gruppe der Polycarbonate oder der aliphatischen oder aromatischen Kohlenwasserstoffe ausgewählt ist.

Sie vereinen in sich in idealer Weise die Eigenschaften von Polyester und Polyamid, so insbesondere die vorteilhaften mechanischen und thermischen Eigenschaften. Wesentlich für die Erfüllung der haftvermittelnden Funktion bzw. der verträglichmachenden Eigenschaften der Block-Polyesteramide ist das Vorliegen zweier kristalliner Phasen, d.h. Polyamid- und Polyestersegmente kristallisieren in separaten Phasen, sowie eine Mindestgröße der jeweiligen Segmente.

Die erfindungsgemäßen Haft- bzw. Verträglichkeitsvermittler-Formmassen auf Basis von hochmolekularen Block-(Co)polyesteramiden werden durch direkte Veresterung von carboxyl- oder hydroxycarboxylterminierten Polyamidvorkondensaten und hydroxyl- oder hydroxycarboxylterminierten Polyestersegmenten hergestellt. Die Diolkomponente muss sowohl mit den Polyamid- als auch mit den Polyestersegmenten weitgehend unverträglich sein.

Für die Ausbildung der Polymergrenzflächen im System Polyamid/ Polyester/ Haftvermittler ist das Benetzungsverhalten der Polymere wesentlich, wobei insbesondere die Bildung der Polymergrenzfläche zwischen Haftvermittler und Polyester kritisch ist. Aufgrund der speziellen Struktur besitzen die erfindungsgemässen Haftvermittler Oberflächenspannungen ähnlich den verwendeten Polyestertypen, so dass eine gute Benetzung resultiert, die eine Voraussetzung für eine gute Adhäsion darstellt. Statistische oder alternierende Copolyesteramide besitzen stets mittlere Oberflächenspannungen, so dass weder Polyamid noch Polyester optimal benetzt werden. Weiterhin wird die Ausbildung eines stoffschlüssigen Verbunds durch die geringe Wechselwirkung kurzer Kettenabschnitte und die behinderte Interdiffusion erschwert.

Im Gegensatz dazu können bei den erfindungsgemässen Block-(Co)polyesteramiden erstmals aufgrund des definierten Aufbaus, Polyester (Polyamid)-Segmente mit Struktureinheiten des angrenzenden Polyesters (Polyamids) wechselwirken und abhängig von der Kontaktzeit der Schmelzen interdiffundieren, so dass bei wachsender Polymergrenzfläche ein fester, stoffschlüssiger Verbund entsteht. Der Gewichtsanteil der Esterstrukturen der erfindungsgemäßen Block-(Co)polyesteramide beträgt zwischen 30 und 70 %, der Anteil der Amidstrukturen zwischen 70 und 30 %.

Die Erfindung betrifft des weiteren ein Verfahren zur Herstellung der erfindungsgemäßen Block-Polyesteramid-Formmassen. Die Polyamid-bildenden Komponenten werden nach üblicher Weise auf eine exakt festgelegte zahlenmittlere Molmasse vorpolymerisiert und nach Beendigung der Entgasungsphase so lange bei vermindertem Druck gerührt, bis der Wassergehalt des Vorkondensates 0,005 Gew.- % unterschreitet. Dann erfolgt Zugabe des festen oder geschmolzenen Polyestervorkondensates sowie der teilweisen bzw. gesamten Zudosierung der zweiten Diolkomponente und des Veresterungskatalysators. Unmittelbar nach der Zugabe wird die Vakuumphase eingeleitet. Erfolgte zusammen mit der Zugabe des Polyestervorkondensates lediglich eine teilweise Dioldosierung, so wird der restliche Teil des zweiten Diolsystems zu Beginn der Aufbauphase des Blockpolyesteramids unter vermindertem Druck zugegeben. Eine weitere Variante besteht darin, die gesamte oder eine Teilmenge der Diolkomponente vor Beginn der 1. Vakuumphase zu dosieren.

Die Verfahrensparameter Druck, Temperatur und der Katalysatortyp sind so gewählt, daß während der Polykondensation des Blockpolyesteramids die Molmassen und die Zusammensetzung der eingesetzten Polymerblöcke nicht verändert werden. In ersten Schritt des erfindungsgemässen Verfahrens (Polyamid-Präpolymere) werden daher Temperaturen von 180 - 300°C und ein Druck im Bereich von Atmosphärendruck bis 3 x 10⁶ Pa (30 bar) angelegt. Beendet wird die erste Verfahrensstufe durch Anlegen eines Vakuums (Druck: < 10 mbar). Die erfindungsgemässen Polyamidvorkondensate weisen eine NH₂-Endgruppenkonzentration unter 5 mmol/kg und einen Wassergehalt von maximal 0,005 Gew.-% auf. In einem zweiten Verfahrensschritt werden Polyestervorkondensate durch direkte Veresterung von entsprechenden Dicarbonsäuren und Diolen oder durch Umesterung der Dicarbonsäuredimethylester mit Diolen erhalten. Erfindungsgemäß sind nur solche Polyestervorkondensate, die eine maximale COOH-End-gruppenkonzentration von 50 mmol/kg aufweisen. In der dritten Verfahrensstufe werden Polyamid- und Polyesterpräpolymere unter Zusatz eines Diolsystems bei Temperaturen im Bereich von 220 - 300°C zu den erfindungsgemässen Blockpolyesteramiden kondensiert. Der Druck wird stufenweise bzw. lineär auf einen Enddruck von 1 - 10 mbar reduziert. Der Veresterungskatalysator kann im erfindungsgemässen Verfahren in Mengen von 0.05 bis 0.2 Gew.-%, bezogen auf den Gesamteinsatz, eingesetzt werden. Zusätzlich können während der Polykondensation Stabilisatoren eingesetzt werden.

Die Polyamidsegmente enthalten von Lactamen abgeleitete Strukturelemente. Beispiele hierfür sind PA 6, PA 11 und PA 12 sowie Copolyamide und Multipolyamide basierend auf den Dicarbonsäuren C2 - C36 und Diaminen C2 - C12, oder den Salzen sowie Lactam-6, Lactam-12, Isophthalsäure, Terephthalsäure und Naphthalindicarbonsäure. Die Polyamidvorkondensate haben eine Carboxyl-Endgruppenkonzentration von höchstens 2000 mmol/kg, eine Hydroxyl-Endgruppenkonzentration von höchstens 1000 mmol/kg und eine Amino-Endgruppenkonzentration von höchstens 5 mmol/kg.

Für den Aufbau der Polyestervorkondensate werden aromatische Dicarbonsäuren oder deren Diester eingesetzt. Bevorzugt sind Terephthalsäure, Isophthalsäure, Naphthalindicarbonsäuren, 4.4'-Oxybis(benzoesäure), 5-t-Butyl-1.3-benzenedicarbonsäure bzw. deren Dimethylester. Als Diole kommen alle aliphatischen oder cycloaliphatischen C₂ - C₁₂ -Diole in Frage, insbesondere werden Ethylengykol, Butandiol und Hexandiol eingesetzt. Die Polyestervorkondensate haben eine Hydroxyl-Endgruppenkonzentration von höchstens 2000 mmol/kg und eine Carboxyl-Endgruppenkonzentration von höchstens 50 mmol/kg aufweisen.

Als Diolkomponente kann prinzipiell jeder bifunktionelle Alkohol mit primären und sekundären OH-Gruppen eingesetzt werden. Vorzugsweise werden primäre Diole mit einer zahlenmittleren Molmasse größer als 500 g/mol eingesetzt. Spezielle Rezepturen erfordern den Einsatz einer binären Diolmischung, die aus einem niedermolekularen und einem höhermolekularen Diol (> 500 g/mol) besteht. Als längerkettige Diole kommen Polyether, statistische Polyesteramide oder Kohlenwasserstoffe in betracht. Bevorzugt eingesetzt werden OH-terminierte Polycaprolaktone, Polyalkylenadipate, Polyalkylendimerate, Polydimerdioldimerate, Polycarbonate, Polyalkylenglykole auf Basis C₂ - C₄ und Dimerdiol. Die niedermolekulare Diolkomponente wird ausgewählt aus der Gruppe der aliphatischen oder cycloaliphatischen C₂ - C₁₂ - Diole oder der aromatischen C₆ - C₁₈ - Diole.

Den erfindungsgemäß eingesetzten Estern und Polyamiden können auch die üblichen Verstärkungs- bzw. Füllstoffe wie mineralische Füllstoffe, UV-Stabilisatoren, Antioxidantien, Pigmente, Farbstoffe, Nukleirmittel, Kristallisationsbeschleuniger bzw. -verzögerer, Fließhilfsmittel, Gleitmittel, Entformungsmittel, Flammschutzmittel sowie Mittel, die die elektrische Leitfähigkeit verbessern, sowie modifizierte bzw. nicht modifizierte Kautschuke zugesetzt sein.

Die Vereinigung der drei Komponenten (A), (B) und (C) muß unter Erhalt der definiert vorpolymerisierten Polyamid- und Polyestersegmente erfolgen, so daß ein Blockpolyesteramid mit definierter Struktur erhalten wird. Nur unter dieser Voraussetzung können die erfindungsgemässen Blockpolyesteramide ihre Aufgabe als Haftvermittler erfüllen. Diese definierte Struktur kann sich nur einstellen, wenn ein hydrolytischer Abbau der Polyamid- und Polyestervorkondensate und Amid-Ester-Austauschreaktionen vermieden werden und die jeweiligen Vorkondensate die erfindungsgemässen Endgruppenfunktionalität und - Konzentration besitzen. So ist es unabdingbar, daß im Anschluß an Verfahrensschritt 1, der Herstellung der Polyamidvorkondensate, eine Vakuumphase angeschlossen wird und das Polyestervorkondensat als Feststoff oder als Schmelze unter vermindertem Druck zudosiert wird. Der 2. Verfahrenschritt erfordert die Reduktion der Carboxylendgruppenkonzentration auf maximal 50 mmol/kg und des Wassergehaltes auf unter 0,005 Gew.-%. Die mittlere Molmasse beider Vorkondensate muß so eingestellt werden, daß die Ausbildung zweier kristalliner Phasen im Endprodukt Blockpolyesteramid möglich ist, aber nicht die geforderten Endgruppenkonzentrationen überschritten werden. In der 3. Stufe werden die beiden Vorkondensate unter Zusatz der Diolkomponente, des Veresterungskatalysators und gegebenenfalls eines Stabilisatorsystems zu einem hochmolekularen Polyesteramid polykondensiert. Dazu sind Temperaturen im Bereich von 220 - 300°C und ein Vakuum von < 10 mbar erforderlich.

Die Erfindung betrifft weiterhin die Verwendung der Haft- bzw. Verträglichkeitsvermittler-Formmassen auf Basis der teilkristallinen, hochmolekularen Block-(Co)polyesteramide zur Herstellung von Fasern, Folien und Formkörpern oder als Verträglichkeitsvermittler in Coextrudaten auf Basis von Polyamid und Polyester.

Die Erfindung betrifft außerdem thermoplastische Mehrschichtverbunde, bestehend aus mindestens einer Schicht aus einer Formmasse auf Basis von (Co)polyamid, mindestens einer Schicht aus einer Formmasse auf Basis von (Co)polyester und mindestens einer Zwischenschicht auf Basis einer Haftvermittler-Formmasse mit den beschriebenen erfindungsgemäßen hochmolekularen Block-(Co)polyesteramiden. Die Fertigung der erfindungsgemäßen Mehrschichtverbunde kann ein- oder mehrstufig erfolgen. Beim einstufigen Extrusionsverfahren werden in üblicher Weise die verschiedenen Schmelzen coextrudiert. Bei den mehrstufigen Verfahren wird zunächst ein Formteil aus der einen Komponente hergestellt und dann mit den übrigen Komponenten durch Pressen, Spritzgießen oder Extrudieren verbunden.

Die erfindungsgemäßen Mehrschichtverbunde zeigen in hervorragendem Maße eine gute Beständigkeit sowie eine gute Sperrwirkung gegenüber chemischen Reagenzien, Lösungsmitteln und Kraftstoffen. Ferner sind die Schichten kraftschlüssig miteinander verbunden. Diese Verbindung ist direkt nach der Extrusion vorhanden und bleibt auch nach dem Eintauchen der Verbunde in Kraftstoffe bestehen.

Die erfindungsgemäßen Mehrschichtverbunde finden bei Konstruktionsteilen, vor allem in Bereich der Automobil-, Elektro-, Maschinenbau-Industrie Verwendung. Insbesondere finden sie Verwendung als Folien oder als Mehrschichtrohre im Kfz-Bereich.

Die Erfindung betrifft daher auch Mehrschicht-Polymerschlauch- oder Rohrleitungen, die gegebenenfalls auch in mindestens einem Teilbereich gewellt sein können, bestehend aus einer Innen- und Außenschicht auf Basis von Polyamid und Polyester, wobei Innen- und Außenschicht durch mindestens eine Zwischenschicht auf Basis einer Haftvermittler-Formmasse auf Basis der erfindungsgemäßen hochmolekularen Block-Copolyesteramide verbunden ist. Die Innenschicht der erfindungsgemäßen Polymerrohr- oder Schlauchleitung ist gegenüber dem zu transportierenden Medium inert; die Außenschicht ist gegenüber Druck und mechanischen Einflüssen beständig.

Die Schichtdicke der erfindungsgemäßen Schlauch- oder Rohrleitung ist unkritisch. Bevorzugt sind
- Außenschichtdicken im Bereich von 0,2 bis 0,8 mm,
- Haftschichtdicken im Bereich von 0,05 bis 0,3 mm, und
- Innenschichtdicken im Bereich von 0,01 bis 0,7 mm.

Wie oben ausgeführt ist, ist es auch möglich, daß die Wandung der Schlauch- oder Rohrleitung mit einer ring- oder spiralförmigen Wellung versehen ist, die Schutzschichten antistatisch, schlagzäh oder mit Weichmachern oder anderen Additiven nach dem Stand der Technik zu modifizieren bzw. durch Zugabe von Glasfasern längenstabil zu machen.

Die erfindungsgemäßen Mehrschicht-Polymerleitungen können in einem Leitungsteil gewellt sein, und die durch die Wellen gebildeten Ringe verlaufen um die Rohrleitungsachse, wobei die Wellen zumindest teilweise in ovaler Form oder in Form einer Elypse bzw. in Form eines an einer Seite abgeflachten Kreises ausgebildet sein können. Derartige Geometrien, d.h. Ausbildung der Wellen von Rohrleitungen, sind z.B. in DE-A-4432584 beschrieben.

Die erfindungsgemäße Polymerleitung kann durch Coextrusion eines Polymerrohres und gegebenenfalls anschließende Ausbildung der Wellen samt gegebenenfalls vorhandener Abflachung durch Blas- oder Saugformen hergestellt werden.

Die erfindungsgemäße Polymerleitung kann aber auch durch Extrusionsblasformen, Coextrusionsblasformen, sequentielles Blasformen mit oder ohne Schlauchmanipulationen hergestellt werden.

Die Erfindung soll nun anhand der folgenden Beispiele näher erläutert werden.

### Beispiele 1 - 12

### Beispiel 1

### Polybutylenterephthalat (PBT) mit Mₙ = 2200 g/mol (COOH-Konzentration ≤ 50 mmol/kg)

50,0 kg Terephthalsäure, 39,3 kg Butandiol und 60 g Butylzinnsäure werden bei Temperaturen von 180 - 230°C kondensiert. Nach Beenden der Veresterung wird das Kondensat auf ein Kühlband ausgetragen und mittels Brecher zerkleinert. Das PBT-Vorkondensat besitzt eine Lösungsviskosität von 1,07 (0,5% in m-Kresol) und einen Schmelzpunkt von 207°C.

### Beispiel 2

### Polybutylenterephthalat mit Mₙ = 2800 g/mol (COOH-Konzentration ≤ 50 mmol/kg)

50,0 kg Terephthalsäure, 57,0 kg Butandiol und 60 g Butylzinnsäure werden bei Temperaturen von 180 - 220°C unter Normaldruck kondensiert. Nach 3,5 h wird für 40 min. volles Vakuum angelegt und anschliessend die Schmelze auf ein Kühlband ausgetragen und gebrochen. Das PBT-Vorkondensat weist eine Lösungsviskosität von 1,09 (0,5% in m-Kresol) und einen Schmelzpunkt von 212°C auf.

### Beispiel 3

25,0 kg 12-Aminolaurinsäure und 1,71 kg Dodekandicarbonsäure werden bei Temperaturen bis 260°C zu einem PA12-Vorkondensat kondensiert. Dann wird für 1 Stunde Vakuum (< 10 mbar) angelegt. Nach Brechen des Vakuums mit Stickstoff werden 16,8 kg des Polybutylenterephthalat-Vorkondensats aus Beispiel 1 sowie 60 g Butylzinnsäure unter Rühren in die Polyamidschmelze eingetragen. Unmittelbar danach wird wieder Vakuum angelegt. Die Öltemperatur verbleibt auf 260°C. Nach 40 min., gerechnet seit Beginn der 2. Vakuumphase, werden 1,0 kg Dimerdiol über eine Schleuse zudosiert. Nach weiteren 50 min. wird das gewünschte Drehmoment erreicht und das Blockpolymer ausgetragen.

### Beispiel 4

20,0 kg 12-Aminolaurinsäure und 2,04 kg Dodekandicarbonsäure werden bei Temperaturen bis 260°C zu einem PA12-Vorkondensat kondensiert. Dann wird für 1 Stunde Vakuum (< 10 mbar) angelegt. Nach Brechen des Vakuums mit Stickstoff werden 20,0 kg des Polybutylenterephthalat-Vorkondensats aus Beispiel 1 sowie 60 g Butylzinnsäure unter Rühren in die Polyamidschmelze eingetragen. Unmittelbar danach wird wieder Vakuum angelegt. Die Öltemperatur verbleibt auf 260°C. Nach 40 min., gerechnet seit Beginn der 2. Vakuumphase, werden 1,0 kg Pripol 2033 über eine Schleuse zudosiert. Nach weiteren 50 min. wird das gewünschte Drehmoment erreicht und das Blockpolymer ausgetragen.

### Beispiel 5

17,0 kg 12-Aminolaurinsäure und 2,83 kg Dodekandicarbonsäure werden bei Temperaturen bis 260'C zu einem PA12-Vorkondensat kondensiert. Dann wird für 1 Stunde Vakuum (< 10 mbar) angelegt. Nach Brechen des Vakuums mit Stickstoff werden 27,6 kg des Polybutylenterephthalat-Vorkondensats aus Beispiel 1 sowie 60 g Butylzinnsäure unter Rühren in die Polyamidschmelze eingetragen. Unmittelbar danach wird wieder Vakuum angelegt. Die Öltemperatur verbleibt auf 260°C. Nach 40 min., gerechnet seit Beginn der 2. Vakuumphase, werden 1,0 kg Dimerdiol über eine Schleuse zudosiert. Nach weiteren 50 min. wird das gewünschte Drehmoment erreicht und das Blockpolymer ausgetragen.

### Beispiel 6

20,0 kg 12-Aminolaurinsäure und 2,32 kg Dodekandicarbonsäure werden bei Temperaturen bis 260°C zu einem PA12-Vorkondensat kondensiert. Dann wird für 1 Stunde Vakuum (< 10 mbar) angelegt. Nach Brechen des Vakuums mit Stickstoff werden 28,2 kg des Polybutylenterephthalat-Vorkondensats aus Beispiel 1, 0,8 kg Dimerdiol sowie 52 g Butylzinnsäure unter Rühren in die Polyamidschmelze eingetragen. Unmittelbar danach wird wieder Vakuum (< 2 mbar) angelegt. Die Öltemperatur verbleibt auf 260°C. Nach 100 min. wird das gewünschte Drehmoment erreicht und das Blockpolymer ausgetragen.

### Beispiel 7

8,0 kg Laurinlaktam werden unter Zusatz von 0,388 kg Dodekandicarbonsäure polymerisiert (Druckphase: 300°C und 20 bar, Entspannen und Entgasen bei 280°C). Die Schmelze wird auf ein Kühlband ausgetragen und gebrochen. Das Polyamid-12-Vorkondensat hat eine zahlenmittlere Molmasse von 4070 g/mol. 450 g dieses PA12-Vorkondensates werden aufgeschmolzen und durch Anlegen eines Vakuums (< 10 mbar, 1h) vom Restwasser befreit. Dann werden 300 g Schmelze des Polybutylenterephthalt-Vorkondensates aus Beispiel 1, 50 g Polycaprolaktondiol mit Mₙ = 1000 g/mol und 0.7 g Butylzinnsäure zudosiert. Unmittelbar danach wird der Reaktor verschlossen und der Druck vermindert (< 2 mbar). Nach 2h wird die Veresterung durch Brechen des Vakuums beendet und das Blockpolymer ausgetragen.

### Beispiel 8

36,0 kg Laurinlaktam werden unter Zusatz von 2,17 kg Terephthalsäure polymerisiert (Druckphase: 300°C und 20 bar, Entspannen und Entgasen bei 280°C). Die Schmelze wird auf ein Kühlband ausgetragen und gebrochen. Das Polyamid-12-Vorkondensat hat eine zahlenmittlere Molmasse von 3000 g/mol.

400 g dieses PA12-Vorkondensates werden aufgeschmolzen und durch Anlegen eines Vakuums (< 10 mbar, 1h) vom Restwasser befreit. Dann werden 300 g Schmelze des Polybutylenterephthalt-Vorkondensates aus Beispiel 1, 50 g Polytetrahydrofuran mit Mₙ = 2000 g/mol und 0.7 g Butylzinnsäure zudosiert. Unmittelbar danach wird der Reaktor verschlossen und der Druck vermindert ( < 2 mbar). Nach 2h wird die Veresterung durch Brechen des Vakuums beendet und das Blockpolymer ausgetragen.

### Beispiel 9

18,0 kg 12-Aminolaurinsäure und 2,64 kg Dodekandicarbonsäure werden bei Temperaturen bis 240'C zu einem PA12-Vorkondensat kondensiert. Dann werden 1,06 kg Dimerdiol und 46 g eines Veresterungskatalysators hinzugegeben und für 1 Stunde Vakuum (Enddruck < 10 mbar) angelegt. Nach Brechen des Vakuums mit Stickstoff werden 26,78 kg des Polybutylenterephthalat-Vorkondensats aus Beispiel 2 unter Rühren in die Polyesteramidschmelze eingetragen. Unmittelbar danach wird wieder Vakuum angelegt. Die Öltemperatur wird auf 260°C erhöht. Nach 90 min., gerechnet seit Beginn der 2. Vakuumphase wird das gewünschte Drehmoment erreicht und das Blockpolymer ausgetragen.

**Tab. 1:**

| Zusammensetzung und Analysenergebnisse der Polyesteramide: Beispiele 3 bis 8 | | | | | | | | | | |
|---|---|---|---|---|---|---|---|---|---|---|
| Beispiel | PBT-VK | | 2. Diolkomponente | | ηrel³ | Tₘ₁ [°C] | Tₘ₂ [°C] | Zug-E Modul | RF¹ | RD² |
| | Typ | Konz.⁵ | Typ | Konz.⁴ | | | | | | |
| 3 | Bsp. 1 | 39,6 | C₃₆-Diol | 2,4 | 1,64 | 169 | 207 | 1030 | 38 | 320 |
| 4 | Bsp. 1 | 48,3 | C₃₆-Diol | 2,4 | 1,55 | 162 | 209 | 900 | 37 | 360 |
| 5 | Bsp. 1 | 58,7 | C₃₆-Diol | 2,1 | 1,57 | 145 | 201 | 800 | 33 | 430 |
| 6 | Bsp. 2 | 56,8 | C₃₆-Diol | 1,6 | 1,61 | 163 | 213 | 1050 | 40 | 410 |
| 7 | Bsp. 1 | 37,5 | PCL-Diol⁷ | 6,2 | 1,51 | 172 | 200 | 610 | 35 | 360 |
| 8 | Bsp. 1 | 40,0 | Poly-THF⁸ | 6,7 | 1,58 | 168 | 205 | 650 | 36 | 400 |
| 9 | Bsp. 2 | 57,0 | C₃₆-Diol | 2,3 | 1,55 | 154 | 211 | 900 | 40 | 320 |

| | | | | | | | | | | |
|---|---|---|---|---|---|---|---|---|---|---|
| ¹RF = Reißfestigkeit [N/mm²] | | | | | | | | | | |
| ²RJ = Reißdehnung [N/mm²] | | | | | | | | | | |
| ³ηᵣₑₗ = 0,5% m-Kresol (DIN 53727) | | | | | | | | | | |
| ⁴ = Gew.-% | | | | | | | | | | |
| ⁵ = Gew.-% ⁶ = PBT-VK / Polybutylenterephthalat-Vorkondensat | | | | | | | | | | |
| ⁷ = PCL-Diol : Polycaprolactondiol | | | | | | | | | | |
| ⁸ = Poly-THF : Polytetrahydrofurandiol (oder Polytetramethylenglykol) | | | | | | | | | | |

### Beispiel 10

Zur Überprüfung der Verbundhaftung wurden zweiteilige DIN-Zugstäbe auf einer Arburg Allrounder 350-210-750 gefertigt und einem Zugversuch unterzogen. Zunächst wurden Einlegeteile aus den Blockpolyesteramiden hergestellt, auf die die entsprechenden Homopolymere oder Polymercompounds aufgespritzt wurden. Die Verarbeitungstemperaturen wurden so gewählt, dass ein partielles Aufschmelzen der Einlegeteile an der gemeinsamen Kontaktfläche möglich war. Tabelle 2 fasst die im Zugversuch nach DIN 53455 ermittelten Reissfestigkeiten zusammen.

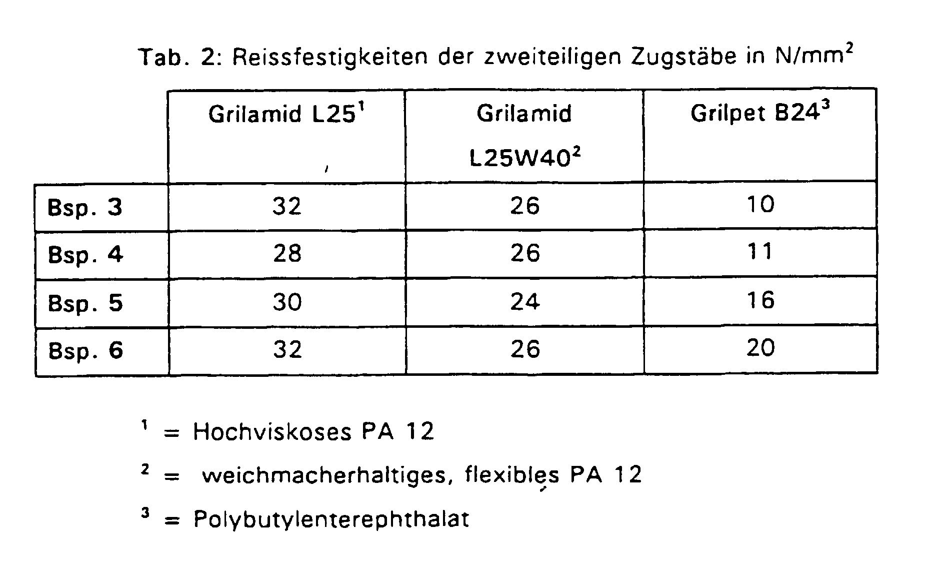

### Beispiel 11

Durch Coextrusion wurden 8x1-3-Schichtrohre mit folgendem Aufbau hergestellt: Innenschicht: 0,45 mm schlagzähmodifiziertes PBT, Mittelschicht: 0,10 mm Haftvermittler Beispiel 5, Aussenschicht: 0,45 mm flexibles Polyamid 12. Die Haftung wird anhand eines Spiralschnitts beurteilt. Auch beim Trennversuch mittes Klinge können keine Ablösungen beobachtet werden. Die Haftung zu beiden Schichten ist also sehr gut. Die gute Verbundhaftung bleibt auch bei 1000 Stunden Lagerung in einem Testbenzin bei 60°C erhalten.

### Beispiel 12

a) Grilamid L25 und Grilpet B24 werden ohne Zusatz im Verhältnis 2:3 extrudiert.
b) 2 Teile Grilamid L25 und 3 Teile Grilpet B24 werden mit 20 % eines Blockpolyesteramids extrudiert.
c) 2 Teile Grilamid L25 und 3 Teile Grilpet B24 werden mit 10 % eines Blockpolyesteramids extrudiert.
d) 2 Teile Grilamid L25 und 3 Teile Grilpet B24 werden mit 5 % eines Blockpolyesteramids extrudiert.

Während bei der Extrusion unter a) ein nicht granulierbarer, stark pulsierender Strang resultiert, bildet sich bei den Extrusionen b - d ein homogener, nicht pulsierender Strang mit glatter Oberfläche, der problemlos granulierbar ist.

### Vergleichsbeispiel

Eine Mischung aus 2,76 kg Terephthalsäure, 4,05 kg 12-Aminolaurinsäure, 0,34 kg Dodekandicarbonsäure und 2,25 kg Butandiol werden in Gegenwart eines Veresterungskatalysators langsam auf 200°C aufgeheizt. Bei einer Temperatur von ca. 180°C beginnt, erkennbar an der regen Wasserdestillation, die Kondensationsreaktionen. Lässt die Destillation nach, steigert man die Temperatur auf 240°C und legt, nach dem die Kolonnenkopftemperatur unter 70°C gesunken ist, Vakuum an (< 10 mbar). Nach einer Vakuumphase von ca. 2h wird die gewünschte Schmelzviskosität erreicht, so dass das Produkt ausgetragen und granuliert werden kann.

Das statistische Polyesteramid weist lediglich einen Schmelzpunkt bei 112'C auf, die Lösungsviskosität beträgt 1,60 (0,5% in m-Kresol).

Die Verbundhaftung wurde, wie in Beispiel 9 beschrieben, mittels Verbundspritzguss (Polyesteramid als Inlay) und anschliessendem Zugversuch überprüft.

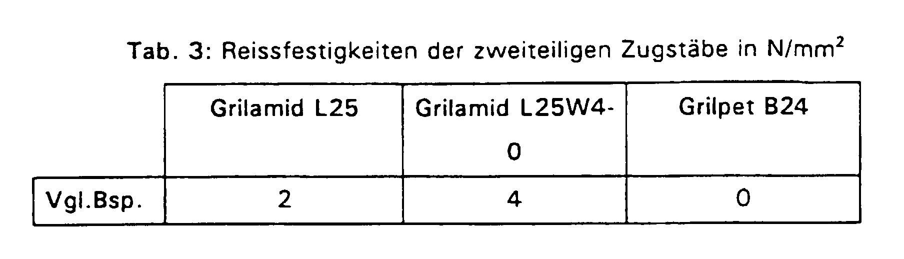

Das Ergebnis des Zugversuchs am zweiteiligen DIN-S3-Zugstab zeigt eine deutlich schlechtere Haftung des statistischen Polyesteramids auf den ausgewählten Homopolymeren als die entsprechenden Blockpolymere. Der Zugstab aus statistischem Polyesteramid und PBT zerfällt bereits bei der Entformung des Spritzlings.

Die Rezeptur des stat. Polyesteramids entspricht einem Blockpolymer, bestehend aus einem PA12-Segment mit der zahlenmittleren Molmasse von ca. 3000 g/mol und einem PBT-Segment mit einer zahlenmittleren Molmasse von ca. 2250 g/mol. Im Gegensatz zum Blockpolymer weist das stat. Polyesteramid aber lediglich einen Schmelzpunkt bei niedriger Temperatur auf (vgl. Bsp. 3). D.h. beim Erwärmen auf beispielsweise 150°C würde, ausreichende Verbundhaftung des stat. Polyesteramids bei RT vorausgesetzt, der Verbund in seine Einzelteile aufgelöst werden, während der Verbund mit dem Blockpolyesteramid aus Bsp.3 auch bei dieser hohen Temperatur weiterhin stabil ist.

Im Vgl. zum entsprechend zusammengesetzten Blockpolyesteramid ist das stat. Polyesteramid ein hochflexibles Polymer mit geringer Festigkeit. Die meisten in Tab. 2 aufgeführten Haftfestigkeiten der Blockpolyesteramide übertreffen die Reissfestigkeit des reinen stat. Polyesteramids.

**Tab. 4:**

| Zusammensetzung und Analysenergebnisse des statistischen Polyesteramids | | | | | | | | | | |
|---|---|---|---|---|---|---|---|---|---|---|
| Beispiel | PBT-VK | | 2. Diolkomponente | | *η*ᵣₑₗ | Tₘ₁ | Tₘ₂ | Zug-E Modul | RF | RD |
| | Typ | Konz | Typ | Konz. | | | | | | |
| Vgl. Bsp. | - | - | - | - | 1,60 | 112 | - | 190 | 15 | 260 |
| Abkürzungen siehe Legende Tab. 1 | | | | | | | | | | |

## Patentansprüche

1. Haft- bzw. Verträglichkeits-Vermittler auf der Basis von teilkristallinen, hochmolekularen Block-(Co)polyesteramiden, dadurch gekennzeichnet, daß die Block-(Co)polyesteramide zwei kristalline Phasen aufweisen, der Gewichtsanteil der Esterstrukturen der Block-(Co)polyesteramide zwischen 30 und 70%, der Anteil der Amidstrukturen zwischen 70 und 30% beträgt, und als Segmente enthalten:
(A) mindestens einen Polyamid-Block mit einer einheitlichen zahlenmittlerem Molmasse von mindestens 1000g/mol, der aus Struktureinheiten aus Laktamen bzw. α,ω-Aminocarbonsäuren mit 6 bis 12 C-Atomen sowie gegebenenfalls Dicarbonsäuren mit 2 bis 44 C-Atomen aufgebaut ist,
(B) mindestens einen Polyesterblock mit einer einheitlichen zahlenmittleren Molmasse von mindestens 1000g/mol, der aus aromatischen Dicarbonsäuren und aliphatischen oder cycloaliphatischen C₂ - C₁₂-Diolen aufgebaut ist, und
(C) mindestens eine Diolkomponente mit einer zahlenmittleren Molmasse von mindestens 500 g/mol, ausgewählt aus Polyalkylenadipaten auf Basis von C₂ - C₆-Diolen oder Polycaprolactondiolen oder Polyalkylendimeraten, Polyethylenglykol, Polypropylenglykol und Polytetrahydrofuran, und der primären Diole der allgemeinen Struktur
HO-R-OH,
wobei R aus der Gruppe der Polycarbonate oder der aliphatischen oder aromatischen Kohlenwasserstoffe ausgewählt ist.

2. Haftvermittler nach Anspruch 1, dadurch gekennzeichnet, daß die Polyamid- oder Copolyamidblöcke (A) Struktureinheiten enthalten abgeleitet von Dicarbonsäuren mit 2-12 C-Atomen und Dicarbonsäuren mit 36 oder 44 C-Atomen.

3. Haftvermittler nach einem der Ansprüche 1 und 2, dadurch gekennzeichnet, daß der Polyamid-Block (A) Struktureinheiten von Lactam-12 enthält.

4. Haftvermittler nach Anspruch 1, dadurch gekennzeichnet, daß die Polyester- oder Copolyesterblöcke (B) aufgebaut sind aus Terephthalsäure, Isophthalsäure und 2.6-Naphthalindicarbonsäure und Ethylenglykol, Butandiol, Hexandiol und Cyclohexandimethanol.

5. Haftvermittler nach Anspruch 1 oder 4, dadurch gekennzeichnet, daß der Polyesterblock (B) auf Polyethylenterephthalat oder Polybutylenterephthalat basiert.

6. Haftvermittler nach einem der vorhergehenden Ansprüche, dadurch gekennzeichnet, daß der Polyamid-Block (A) auf PA 12 und der Polyester-Block (B) auf Polybutylenterephthalat basiert.

7. Haftvermittler nach einem der vorhergehenden Ansprüche, dadurch gekennzeichnet, daß die verwendete Diolkomponente Dimerdiol ist.

8. Verfahren zur Herstellung der Haftvermittler-Formmassen nach den Ansprüchen 1 bis 7, dadurch gekennzeichnet, daß
(A) in einem ersten Polymerisations- oder Polykondensationsschritt bei Temperaturen von 180 bis 300°C, einem Druck von Atmosphärendruck bis 3x10⁶ Pa (30 bar) Polyamid- oder Copolyamidblöcke mit einer Carboxyl-Endgruppenkonzentration von höchstens 2000 mmol/kg und einer Amino-Endgruppenkonzentration von höchstens 5 mmol/kg hergestellt werden und zur Reduktion des Wassergehalts auf unter 0,005 Gew.-% Vakuum angelegt wird, in einem zweiten Schritt
(B) Polyester- oder Copolyesterblöcke als präpolymerisierte Kettenbausteine mit einer maximalen Carboxyl-Endgruppenkonzentration von 50 mmol/kg, und einer Hydroxyl-Endgruppenkonzentration von höchstens 2000 mmol/kg, als Festsubsbtanz oder Schmelze zusammen mit der gesamten bzw. einem Teil der Diolkomponente zugegeben werden und
(C) das Reaktionsgemisch unter Vakuum bei einer Temperatur von 220 bis 300°C in Gegenwart von 0,05 bis 0,2 Gew.-% eines Katalysators in einem weiteren Polykondensationsschritt zum hochmolekularen Block-(Co)polyesteramid fertig kondensiert,
(D) ausgetragen oder zu Formkörpern weiterverarbeitet wird.

9. Verwendung der Blockpolyesteramid-Formmassen nach den Ansprüchen 1 bis 7 zur Herstellung von Fasern, Folien und Formkörpern.

10. Verwendung der Blockpolyesteramid-Formmassen nach den Ansprüchen 1 bis 7 als Haft- oder Verträglichkeits-Vermittler in Coextrudaten auf Basis von (Co)polyamid und (Co)polyester.

11. Mehrschicht-Polymerschlauch- oder Rohrleitung, die gegebenenfalls mindestens in einem Teilbereich gewellt ist bestehend aus mindestens einer Innen- und Aussenschicht auf Basis von (Co)polyamid und (Co)polyester, wobei Innen- und Aussenschicht durch mindestens eine Zwischenschicht auf Basis einer Haftvermittler-Formmasse nach einem der Ansprüche 1 bis 7 kraftschlüssig miteinander verbunden sind, und wobei mindestens eine Zwischenschicht zusätzlich Barrierefunktion haben kann.

12. Thermoplastischer Mehrschichtverbund bestehend aus
a) mindestens einer Schicht aus einer Formmasse als Basis von (Co)polyamid,
b) mindestens einer Schicht aus einer Formmasse auf Basis von (Co)polyester und mindestens einer Schicht aus Zwischenschicht auf Basis einer
c) Haftvermittler-Formmasse gemäß den Ansprüchen 1 bis 7.

## Revendications

1. Promoteur d'adhérence ou de compatibilité, à base de (co)polyester-amides séquencés partiellement cristallins à grande masse moléculaire, caractérisé en ce que les (co)polyesteramides séquencés comportent deux phases cristallines, la proportion pondérale des structures ester des (co)polyesteramides séquencés est de 30 à 70 %, la proportion des structures amides est comprise entre 70 et 30 %, et ils contiennent en tant que segments :
(A) au moins une séquence polyamide ayant une masse moléculaire moyenne en nombre uniformément d'au moins 1000 g/mol, qui est constituée de motifs structuraux à base de lactames ou d'acides α,ω-aminocarboxyliques ayant de 6 à 12 atomes de carbone, et éventuellement d'acides dicarboxyliques ayant de 2 à 44 atomes de carbone,
(B) au moins une séquence polyester ayant une masse moléculaire moyenne en nombre uniformément d'au moins 1000 g/mol, qui est constituée d'acides dicarboxyliques aromatiques et de diols aliphatiques ou cycloaliphatiques en C₂-C₁₂, et
(C) au moins un composant diol ayant une masse moléculaire moyenne en nombre d'au moins 500 g/mol, choisi parmi les poly(adipates d'alkylène) à base de diols en C₂-C₆ ou de polycaprolactonediols ou de polyalkylènedimères, le polyéthylèneglycol, le polypropylèneglycol et le polytétrahydrofuranne, et les diols primaires de structure générale
HO-R-OH
dans laquelle R est choisi dans le groupe des polycarbonates ou des hydrocarbures aliphatiques ou aromatiques.

2. Promoteur d'adhérence selon la revendication 1, caractérisé en ce que les séquences polyamide ou copolyamide (A) contiennent des motifs structuraux qui dérivent d'acides dicarboxyliques ayant de 2 à 12 atomes de carbone et d'acides dicarboxyliques ayant 36 ou 44 atomes de carbone.

3. Promoteur d'adhérence selon l'une des revendications 1 et 2, caractérisé en ce que la séquence polyamide (A) contient des motifs structuraux de lactame-12.

4. Promoteur d'adhérence selon la revendication 1, caractérisé en ce que les séquences polyester ou copolyester (B) sont constituées d'acide téréphtalique, d'acide isophtalique et d'acide 2,6-naphtalènedicarboxylique et d'éthylèneglycol, de butanediol, d'hexanediol et de cyclohexanediméthanol.

5. Promoteur d'adhérence selon la revendication 1 ou 4, caractérisé en ce que la séquence polyester (B) se fonde sur du poly(téréphtalate d'éthylène) ou du poly(téréphtalate de butylène).

6. Promoteur d'adhérence selon l'une des revendications précédentes, caractérisé en ce que la séquence polyamide (A) se fonde sur le PA 12 et la séquence polyester (B) sur le poly(téréphtalate de butylène).

7. Promoteur d'adhérence selon l'une des revendications précédentes, caractérisé en ce que le composant diol utilisé est un diol dimère.

8. Procédé de préparation des mélanges à mouler à effet promoteur d'adhérence selon les revendications 1 à 7, caractérisé en ce que
(A) dans une première étape de polymérisation ou de polycondensation, à des températures de 180 à 300°C, sous une pression comprise entre la pression atmosphérique et 3.10⁶ Pa (30 bar), on prépare des séquences polyamide ou copolyamide avec une concentration des groupes carboxyle terminaux d'au plus 2000 mmol/kg et une concentration des groupes amino terminaux d'au plus 5 mmol/kg, et on applique un vide pour réduire la teneur en eau à une valeur inférieure à 0,005 % en poids, et, dans une deuxième étape,
(B) on ajoute les séquences polyester ou copolyester, sous forme de constituants de chaîne prépolymérisés, ayant une concentration maximale des groupes carboxyle terminaux de 50 mmol/kg et une concentration des groupes hydroxyle terminaux d'au plus 2000 mmol/kg, sous forme d'une matière solide ou fondue, en même temps que la totalité ou une partie du composant diol, et
(C) dans une autre étape de polycondensation, on soumet à une condensation complète le mélange réactionnel, sous vide à une température de 220 à 300°C, en présence de 0,05 à 0,2 % en poids d'un catalyseur, pour obtenir le (co)polyesteramide séquencé à grande masse moléculaire,
(D) on reprend le produit en l'état, ou on le soumet à une post-transformation en objets moulés.

9. Utilisation des mélanges à mouler à base de polyesteramides séquencés selon les revendications 1 à 7 pour fabriquer des fibres, des feuilles ou des objets moulés.

10. Utilisation des mélanges à mouler à base de polyesteramides séquencés selon les revendications 1 à 7 en tant que promoteurs d'adhérence ou de compatibilité dans des co-extrudats à base de (co)polyamides et de (co)-polyesters.

11. Tuyau souple ou tuyauterie en un polymère multicouche, qui est éventuellement ondulé dans au moins une zone partielle, constitué d'au moins une couche intérieure et d'une couche extérieure à base d'un (co)polyamide et d'un (co)polyester, la couche intérieure et la couche extérieure étant reliées l'une à l'autre par une liaison dynamique, par au moins une couche intermédiaire à base d'un mélange à mouler à effet promoteur d'adhérence selon l'une des revendications 1 à 7, au moins une couche intermédiaire pouvant avoir une fonction barrière.

12. Composite thermoplastique multicouche constitué
a) d'au moins une couche d'un mélange à mouler à base de (co)polyamide,
b) d'au moins une couche d'un mélange à mouler à base d'un (co)polyester et d'au moins une couche constituée d'une couche intermédiaire à base
c) d'un mélange à mouler à effet promoteur d'adhérence selon les revendications 1 à 7.

## Claims

1. Adhesion or respectively compatibility promoter based on partially crystalline, high-molecular block (co)polyester amides, characterised in that the block (co)polyester amides have two crystalline phases, the weight proportion of the ester structures of the block (co)polyester amides amounting to between 30 and 70%, and the proportion of the amide structures amounting to between 70 and 30%, and they contain as segments:
(A) at least one polyamide block, having a uniform mean molar mass of at least 1000 g/mol and being made up of structural units formed from lactams or respectively α,ω-aminocarboxylic acids having between 6 and 12 C atoms and possibly dicarboxylic acids having between 2 and 44 C atoms,
(B) at least one polyester block, having a uniform mean molar mass of at least 1000 g/mol and being made up of aromatic dicarboxylic acids and aliphatic or cycloaliphatic C₂ - C₁₂ diols, and
(C) at least one diol component, having a mean molar mass of at least 500 g/mol, selected from polyalkylene adipates based on C₂ - C₆ diols or polycaprolactone diols or polyalkylene dimerates, polyethylene glycol, polypropylene glycol and polytetrahydrofurane, and the primary diols of the general structure
HO-R-OH,
R being selected from the group of polycarbonates or of aliphatic or aromatic hydrocarbons.

2. Adhesion promoter according to claim 1, characterised in that the polyamide or copolyamide blocks (A) contain structural units derived from dicarboxylic acids having 2 - 12 C atoms and dicarboxylic acids having 36 or 44 C atoms.

3. Adhesion promoter according to one of claims 1 and 2, characterised in that the polyamide block (A) contains structural units of lactam 12.

4. Adhesion promoter according to claim 1, characterised in that the polyester or copolyester blocks (B) are made up of teraphthalic acid, isophthalic acid and 2.6-naphthaline dicarboxylic acid and ethylene glycol, butane diol, hexane diol and cyclohexane dimethanol.

5. Adhesion promoter according to claim 1 or 4, characterised in that the polyester block (B) is based on polyethylene terephthalate or polybutylene terephthalate.

6. Adhesion promoter according to one of the preceding claims, characterised in that the polyamide block (A) is based on PA 12, and the polyester block (B) is based on polybutylene terephthalate.

7. Adhesion promoter according to one of the preceding claims, characterised in that the diol component used is dimerdiol.

8. Method of producing the adhesion promoter moulded masses according to claims 1 to 7, characterised in that
(A) in a first polymerisation or polycondensation step, at temperatures of between 180 and 300° C and at a pressure from atmospheric pressure to 3x10⁶ Pa (30 bar), polyamide or copolyamide blocks are produced, having a carboxyl final group concentration of 2000 mmol/kg at the most and an amino final group concentration of 5 mmol/kg at the most, and are subjected to a vacuum of less than 0.005 % by wt. to reduce the water content; in a second step
(B) polyester or copolyester blocks are added as prepolymerised chain components having a maximum carboxyl final group concentration of 50 mmol/kg and a hydroxyl final group concentration of 2000 mmol/kg at the most, as a solid substance or as a molten mass together with the entire portion or respectively with a portion of the diol component;
(C) the reaction mixture is finally condensed to form the high-molecular block (co)polyester amide in a vacuum at a temperature of between 220 and 300° C in the presence of between 0.05 and 0.2 % by wt. of a catalyst in an additional polycondensation step; and
(D) is extracted or further processed to form moulded bodies.

9. Use of the block polyester amide moulded masses according to claims 1 to 7 for the production of fibres, films and moulded bodies.

10. Use of the block polyester amide moulded masses according to claims 1 to 7 as adhesion or compatibility promoters in co-extrudates based on (co)polyamide and (co)polyester.

11. Multi-layer polymer tubing or pipeline, which is possibly corrugated at least in one partial region and comprises at least one inner layer and outer layer based on (co)polyamide and (co)polyester, inner and outer layers being interconnected in a force-fitting manner by at least one intermediate layer based on an adhesion promoter moulded mass according to one of claims 1 to 7, and at least one intermediate layer being additionally able to have a barrier function.

12. Thermoplastic multi-layer compound comprising
a) at least one layer formed from a moulded mass based on (co)polyamide,
b) at least one layer formed from a moulded mass based on (co)polyester and at least one layer formed from an intermediate layer based on a
c) adhesion promoter moulded mass according to claims 1 to 7.
